(19) Europäisches Patentamt
European Patent Office
Office européen des brevets

(11) EP 1 481 030 B1

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(21) Anmeldenummer: **03743318.2**

(22) Anmeldetag: **20.02.2003**

(51) Int Cl.[7]: **C09D 183/04**, C08L 83/04

(86) Internationale Anmeldenummer:
**PCT/EP2003/001762**

(87) Internationale Veröffentlichungsnummer:
**WO 2003/074621 (12.09.2003 Gazette 2003/37)**

(54) **VERZWEIGTE ORGANOSILICIUMVERBINDUNGEN ALS ANTIMISTING ADDITIVE FÜR SILICONBESCHICHTUNGSZUSAMMENSETZUNGEN**

BRANCHED ORGANOSILICON COMPOUNDS AS ANTIMISTING ADDITIVES FOR SILICONE COATING COMPOSITIONS

COMPOSES ORGANOSILICIQUES RAMIFIES UTILISES COMME ADDITIFS ANTIBUEE POUR DES COMPOSITIONS DE REVETEMENT AUX SILICONES

(84) Benannte Vertragsstaaten:
**BE DE FR GB NL**

(30) Priorität: **07.03.2002 DE 10210026**

(43) Veröffentlichungstag der Anmeldung:
**01.12.2004 Patentblatt 2004/49**

(73) Patentinhaber: **Wacker-Chemie GmbH**
**81737 München (DE)**

(72) Erfinder:
- **LAUTENSCHLAGER, Hans**
  **84533 Haiming (DE)**
- **HERZIG, Christian**
  **83329 Feichten-Waging (DE)**
- **WEIZHOFER, Christine**
  **84375 Kirchdorf (DE)**

(74) Vertreter: **Deffner-Lehner, Maria et al**
**Wacker-Chemie GmbH,**
**Zentralabteilung PLM,**
**Hanns-Seidel-Platz 4**
**81737 München (DE)**

(56) Entgegenhaltungen:
**EP-A- 0 694 573**
**EP-A- 0 716 115**
**WO-A-01/98418**
**WO-A-01/98420**
**US-A- 5 079 300**
**US-A- 5 548 038**
**US-A- 5 760 145**
**US-A- 5 994 454**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 481 030 B1

## Beschreibung

Die Erfindung betrifft die Verwendung von Antimisting Additiven zur Reduktion der Aerosolbildung in vernetzbaren Siliconbeschichtungszusammensetzungen.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert. Die Polyglykolgruppen aufweisenden Antimisting Additiven haben aber den Nachteil, dass sie mit den vernetzbaren Siliconbeschichtungszusammensetzungen schlecht.mischbar sind.

WO 01/98420 (Dow Corning Corp.) offenbart eine flüssige Silicon Antimisting Zusammensetzung, die durch Umsetzung

(a) eines Organohydrogenpolysiloxans mit mindestens 2 Si-H-Gruppen (SiH) mit
(b) eines Organoalkenylsiloxans mit mindestens 3 Alkenylgruppen (C=C) in
(c) Gegenwart eines Platinkatalysators und gegebenenfalls
(d) eines Inhibitors

in einem Verhältnis von C=C/SiH ≥ 4,6 erhalten wird.
Ein extrem großer Überschuss an Organoalkenylsiloxan (C=C) ist notwendig, damit es zu keiner Vergelung kommt. Dieser Überschuss beeinflusst die Release-Eigenschaften des Basis-Systems, der vernetzbaren Siliconbeschichtungszusammensetzung. Weiterhin muss zur Verhinderung einer Vergelung ein Inhibitor zugesetzt werden.

In US-A 5,760,145 (Wacker-Chemie GmbH) sind aliphatisch ungesättigte Kohlenwasserstoffreste aufweisende Organopolysiloxane beschrieben, die verzweigt sind und worin die Organopolysiloxanblöcke über Kohlenwasserstoffbrücken verbunden sind.

Es bestand die Aufgabe Antimisting Additive für vernetzbare Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen.
Die Aufgabe wird durch die Erfindung gelöst.

Gegenstand der Erfindung ist die Verwendung von Antimisting Additiven in vernetzbaren Siliconbeschichtungszusammensetzungen zur Reduktion der Aerosolbildung, dadurch gekennzeichnet, dass als Antimisting Additive verzweigte Organosiliciumverbindungen enthaltend

a) je Molekül mindestens eine Einheit der allgemeinen Formel

$$\begin{array}{c} A \\ | \\ A\text{-}Si\text{-}A \\ | \\ B \end{array} \quad (I)\ ,$$

wobei A einen Rest der allgemeinen Formel

$$-(OSiR^1R^2)_z-(OSiR_2)_x-Y-SiR_2O_{1/2}$$

bedeutet, R gleich oder verschieden ist und einen einwertigen, aliphatisch gesättigten oder aromatischen Kohlenwasserstoffrest mit 1 bis 12 Kohlenstoffatomen je Rest bedeutet,
$R^1$ einen Rest der allgemeinen Formel

$$-OSiR_2-Y-SiR_2O_{1/2}$$

bedeutet,
$R^2$ die Bedeutung von R, $R^1$ oder R' hat, wobei R' einen einwertigen, aliphatisch gesättigten oder aromatischen Kohlenwasserstoffrest mit 1 bis 12 Kohlenstoffatomen je Rest, der ein oder mehrere Heteroatome ausgewählt aus der Gruppe von O, S, N, Si und Ti enthält, bedeutet,
Y einen zweiwertigen Kohlenwasserstoffrest der allgemeinen Formel

$$-CH_2CHR^5(-R^4)_v-$$

bedeutet, $R^4$ einen zweiwertigen Kohlenwasserstoffrest mit 1 bis 10 Kohlenwasserstoffatomen je Rest oder eine chemische Bindung bedeutet, wenn v den Wert 0 hat,
$R^5$ ein Wasserstoffatom ist oder die Bedeutung von R hat,
v 0 oder 1 ist,
x gleich oder verschieden ist, 0 oder 1 ist und
z gleich oder verschieden ist, 0 oder 1 ist,
und B die Bedeutung von A oder R oder R' hat, mit der Maßgabe, dass B gleich R oder R' ist, wenn x 0 ist,

(b) je Molekül mindestens eine Einheit der allgemeinen Formel

$$O_{1/2}SiR_2R^3 \quad \text{(II)},$$

wobei R die oben dafür angegebene Bedeutung hat und
$R^3$ einen aliphatisch ungesättigten Kohlenwassserstoffrest der allgemeinen Formel

$$H_2C{=}CR^5(-R^4)_v-$$

bedeutet, wobei $R^4$ und $R^5$ die oben dafür angegebene Bedeutung haben,

(c) gegebenenfalls Einheiten der allgemeinen Formel

$$O_{1/2}SiR_3 \quad \text{(III)},$$

wobei R die oben dafür angegebene Bedeutung hat,

(d) gegebenenfalls Einheiten der allgemeinen Formel

$$SiR_2O \quad \text{(IV)},$$

wobei R die oben dafür angegebene Bedeutung hat, und

(e) gegebenenfalls Einheiten der allgemeinen Formel

$$O_{1/2}SiR_2-Y-SiR_2O_{1/2} \quad \text{(V)},$$

wobei R die oben dafür angegebene Bedeutung hat,
verwendet werden.

Gegenstand der Erfindung ist weiterhin die Verwendung von Antimisting Additiven in vernetzbaren Siliconbeschichtungszusammensetzungen zur Reduktion der Aerosolbildung, dadurch gekennzeichnet, dass als Antimisting Additive verzweigte Organosiliciumverbindungen herstellbar, indem
in einem ersten Schritt
Verbindungen (1) der allgemeinen Formel

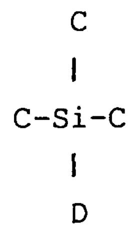

wobei C einen Rest der allgemeinen Formel

$$-(OSiR^6R^7)_z(OSiR_2)_xH$$

bedeutet, wobei x und z die oben dafür angegebene Bedeutung haben,
$R^6$ einen Rest der allgemeinen Formel

$$-OSiR_2H$$

bedeutet und $R^7$ die Bedeutung von R, R' oder $R^6$ hat, wobei R und R' die oben dafür angegebene Bedeutung haben, und D die Bedeutung von C oder R oder R' hat, mit der Maßgabe, dass D gleich R oder R' ist, wenn x 0 ist,
und gegebenenfalls Verbindungen (2) der allgemeinen Formel

$$HR_2SiO(R_2SiO)_nSiR_2H$$

wobei R die oben dafür angegebene Bedeutung hat und n 0 oder eine ganze Zahl im Wert von 1 bis 100 ist, mit Organo (poly)siloxanen (3) der allgemeinen Formel

$$R^3R_2SiO(R_2SiO)_mSiR_2R^3$$

wobei R und $R^3$ die oben dafür angegebene Bedeutung haben und m 0 oder eine ganze Zahl im Wert von 1 bis 1000 ist, in Gegenwart von die Anlagerung von aliphatische Doppelbindung an Si-gebundenen Wasserstoff fördernde Katalysatoren (4) umgesetzt werden,
und gegebenenfalls in einem zweiten Schritt die so erhaltenen verzweigten Organosiliciumverbindungen mit Organopolysiloxanen (5) ausgewählt aus der Gruppe bestehend aus linearen, endständige Triorganosiloxygruppen aufweisenden Organopolysiloxanen und linearen, endständige Hydroxylgruppen aufweisenden Organopolysiloxanen equilibriert werden, verwendet werden.

Die verzweigten Organosiliciumverbindungen und deren Herstellung sind in der eingangs zitierten US-A 5,760,145 beschrieben.

Die erfindungsgemäßen Antimisting Additive, die verzweigten Organosiliciumverbindungen, haben den Vorteil, dass sie nicht nur die Aerosolbildung vernetzbarer Siliconbeschichtungszusammensetzungen in schnellen Beschichtungssystemen reduzieren sondern dass sie insbesondere in beliebigen Mengenverhältnissen homogen mit den vernetzbaren Siliconbeschichtungszusammensetzungen mischbar sind im Gegensatz zu den Polyglykolgruppen aufweisenden Antimisting Additiven gemäß der eingangs zitierten EP-A 716 115.
Weiterhin weisen die erfindungsgemäßen Antimisting Additive keine inhibierende Wirkung auf und sie sind lagerstabil.

Die erfindungsgemäßen Antimisting Additive haben den Vorteil, dass sie vorab mit der Polymerkomponente (A) der vernetzbaren Siliconbeschichtungszusammensetzung abgemischt werden können.

Sie sind damit einfach handhabbar und beeinträchtigen die Release-Eigenschaften des Basis-Systems, der vernetzbaren Siliconbeschichtungszusammensetzung, nicht.

Unter den erfindungsgemäßen, verzweigten Organosiliciumverbindungen sind sowohl polymere als auch oligomere Siloxane zu verstehen.

Vorzugsweise enthalten die erfindungsgemäßen Organosiliciumverbindungen aliphatisch ungesättigte Kohlenwasserstoffreste, bevorzugt durchschnittlich je Molekül mindestens zwei Einheiten der Formel (II), besonders bevorzugt durchschnittlich je Molekül mindestens drei Einheiten der Formel (II).

Bevorzugt enthalten die erfindungsgemäßen Organosiliciumverbindungen eine Anzahl trifunktioneller (=T) und/oder tetrafunktioneller (=Q) Einheiten der Formel (I) sowie eine Anzahl (=X) von aliphatisch ungesättigte Kohlenwasserstoffreste aufweisende Einheiten der Formel (II), die durch die Gleichungen (i), (ii) und (iii)

(i) nur Einheiten der Formel (I) mit B = R oder R', also im Falle von trifunktionellen Einheiten: $(T+1)<X<(T+2)$

(ii) nur Einheiten der Formel (I) mit B = A, also im Falle von tetrafunktionellen Einheiten: $(2Q+1)<X<(2Q+2)$

(iii) Einheiten mit B = R oder R' und B = A, also im Falle von trifunktionellen und tetrafunktionellen Einheiten: $(T+2Q+1)<X<(T+2Q+2)$

bestimmt sind, wobei
T eine Zahl von 0 bis 10,
Q eine Zahl von 0 bis 5 und
die Summe von T+Q eine Zahl von 1 bis 10 bedeutet.

Die erfindungsgemäßen Organosiliciumverbindungen besitzen vorzugsweise eine Viskosität von 200 bis 2 000 000 $mm^2/s$ bei 25°C, bevorzugt 2 000 bis 1 000 000 $mm^2/s$ bei 25°C.

Die erfindungsgemäßen Organosiliciumverbindungen weisen vorzugsweise Jodzahlen zwischen 0,2 und 20, bevorzugt 1 und 10, auf, wobei die Jodzahl die bei der Addition an die Doppelbindung verbrauchte Jodmenge in Gramm pro 100 Gramm eingesetzte, erfindungsgemäße Organosiliciumverbindung angibt.

Beispiele für den Rest R sind jeweils Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl- und der tert.-Pentylrest, Hexylreste, wie der n-Hexylrest, Heptylreste, wie der n-Heptylrest, Octylreste, wie der h-Octylrest und iso-Octylreste, wie der 2,2,4-Trimethylpentyl- und der 2-Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest, Alkarylreste, wie o-, m-, p-Tolylreste, Xylylreste und Ethylphenylreste, Aralkylreste, wie der Benzylrest, sowie der α- und der β-Phenylethylrest.

Bei dem Rest R handelt es sich bevorzugt um den Methylrest.

Beispiele für Reste R' sind der 2-Methoxyethyl- und der 2-Ethoxyethylrest, der 2-Triethylsilylethylrest, der 3-Diethylaminopropylrest und der 4,4-Dimethyl-4-silaheptylrest.

Beispiele für Reste Y sind solche der Formel $-CH_2CH_2-$, $-CH(CH_3)-$, $-(CH_2)_4-$, $-(CH_2)_5-$, $-(CH_2)_6-$, $-(CH_2)_8-$, $-(CH_2)_{10}-$, $-(CH_2)_{12}-$, wobei die Reste der Formel $-CH_2CH_2-$, $-CH(CH_3)-$, $-(CH_2)_6-$, $-(CH_2)_8-$ bevorzugt sind und der Rest der Formel $-CH_2CH_2-$ besonders bevorzugt ist.

Beispiele für Reste $R^3$ sind der Vinyl-, Allyl-, 3-Butenyl-, 5-Hexenyl-, 7-Octenyl-, 9-Decenyl- und der 11-Dodecenylrest, wobei der Vinyl- und der 5-Hexenylrest bevorzugt sind und der Vinylrest besonders bevorzugt ist.

Bevorzugt ist x 1.

Bevorzugt ist z 0.

Bevorzugt ist m 0 oder eine ganze Zahl von 1 bis 40, besonders bevorzugt 0 oder eine ganze Zahl von 1 bis 30.

Beispiele für Verbindungen (1) sind
Octylsilan,
Dodecylsilan,
Phenylsilan,
Methyl-tris(dimethylsiloxy)silan,
Methyl-tris(diethylsiloxy)silan,
n-Propyl-tris(dimethylsiloxy)silan,
n-Octyl-tris(dimethylsiloxy)silan,
Phenyl-tris(dimethylsiloxy)silan,

Tetrakis(dimethylsiloxy)silan,
1,3-Dipropyl-1,1,3,3-tetrakis(dimethylsiloxy)disiloxan und
1,3-Diphenyl-1,1,3,3-tetrakis(dimethylsiloxy)disiloxan,

Beispiele für gegebenenfalls mitverwendete Verbindungen (2) sind
1,1,3,3-Tetramethyldisiloxan,
1,1,3,3,5,5,9,9-Octamethyltetrasiloxan,
1,1,3,3,5,5,9,9,11,11,13,13,15,15-Tetradecamethylheptasiloxan.

Die Menge an gegebenenfalls eingesetzter Verbindung (2) beträgt im erfindungsgemäßen Verfahren soviel, dass der in Verbindung (2) Si-gebundene Wasserstoff weniger als 75%, bevorzugt weniger als 60%, des insgesamt eingesetzten Si-gebundenen Wasserstoffs beträgt.

Beispiele für Organo(poly)siloxane (3) sind
1,3-Divinyl-1,1,3,3-tetramethyldisiloxan,
Mischpolymerisate aus Vinyldimethylsiloxan- und Dimethylsiloxaneinheiten, Mischpolymerisate aus
5-Hexenyldimethylsiloxan- und Dimethylsiloxaneinheiten.

Bei dem erfindungsgemäßen Verfahren kann im ersten Verfahrensschritt eine Art von Verbindung (1) oder verschiedene Arten von Verbindungen (1) eingesetzt werden.

Bei dem erfindungsgemäßen Verfahren kann im ersten Verfahrensschritt eine Art von Organo(poly)siloxan (3) oder verschiedene Arten von Organo(poly)siloxan (3) eingesetzt werden.

Im ersten Schritt des erfindungsgemäßen Verfahrens beträgt das Verhältnis von aliphatischer Doppelbindung im Organo(poly)siloxan (3) zu Si-gebundenem Wasserstoff in den Verbindungen (1) und (2) vorzugsweise 1,3 bis 5,0, bevorzugt 1,5 bis 3,0, besonders bevorzugt 1,6 bis 2,5.

Das erfindungsgemäße Verfahren hat den Vorteil, dass Organosiliciumverbindungen mit verzweigten Strukturen erhalten werden, die mehrere aliphatisch ungesättigte Kohlenwasserstoffreste ausschließlich an den Kettenenden aufweisen. Im Gegensatz dazu werden üblicherweise bei Polyadditionsreaktionen durch Umsetzung von linearen Organopolysiloxanen mit 2 oder mehreren Si-gebundenen Wasserstoffatomen in Form von HRSiO-Einheiten mit linearen Organopolysiloxanen mit mehreren Si-gebundenen Vinylgruppen Produkte mit end- und kettenständigen Vinylgruppen enthalten, die weniger reaktiv sind.

Als die Anlagerung von Si-gebundenem Wasserstoff an aliphatische Mehrfachbindung fördernde Katalysatoren (4) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (4) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Der Katalysator (4) wird im ersten Verfahrensschritt vorzugsweise in Mengen von 0,1 bis 50 Gew.-ppm (Gewichtsteilen je Million Gewichtsteilen), bevorzugt in Mengen von 1 bis 20 Gew.-ppm, jeweils berechnet als elementares Platin und bezogen auf das Gesamtgewicht der Verbindungen (1) und (2) und Organo(poly)siloxane (3), verwendet.

Der erste Verfahrensschritt wird vorzugsweise beim Druck der umgebenden Atmosphäre, also etwa bei 1020 hPa (abs.), durchgeführt, er kann aber auch bei höheren oder niedrigeren Drücken durchgeführt werden. Ferner wird der erste Verfahrensschritt vorzugsweise bei einer Temperatur von 50°C bis 150°C, bevorzugt 80°C bis 120°C, durchgeführt.

In dem ersten Verfahrensschritt können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden nach dem ersten Verfahrensschritt destillativ entfernt.

Vorzugsweise wird der erste Verfahrensschritt so ausgeführt, dass entweder die Komponenten (1), gegebenenfalls (2), (3) und (4) bei Raumtemperatur homogen vermischt werden und danach auf Reaktionstemperatur gebracht werden, oder indem Komponenten (3) und (4) zusammen vorgelegt werden und nach deren Erwärmen auf

Reaktionstemperatur die Komponente (1) und gegebenenfalls (2) zudosiert wird.

Beim ersten Verfahrensschritt, der sogenannten Hydrosilylierung, müssen nicht alle Si-gebundenen Wasserstoffatome umgesetzt werden, vorzugsweise wird aber ein Umsatz von mehr als 95%, bevorzugt mehr als 99% der Si-gebundenen Wasserstoffatome erreicht.

Es ist nicht ganz vermeidbar, dass die erfindungsgemäßen Organopolysiloxane noch Restmengen von Organo(poly)siloxanen (3) enthalten. Restmengen von Organo(poly)siloxanen (3) mit m gleich 0 oder einer ganzen Zahl von 1 bis 5 werden vorzugsweise destillativ entfernt. Organo(poly)siloxane (3) mit m größer 5 können nicht destillativ entfernt werden und verbleiben im Produkt. Die nach dem erfindungsgemäßen Verfahren erhaltenen Organopolysiloxane können daher Organo(poly)siloxane (3) in Mengen von vorzugsweise 0 bis 60 Gew.-%, bevorzugt 0 bis 40 Gew.-%, enthalten.

Die im ersten Verfahrensschritt erhaltenen verzweigten Organosiliciumverbindungen können in einem zweiten Verfahrensschritt mit Organopolysiloxan (5) equilibriert werden.

Bei der Equilibrierung ist die Bildung von Cyclen ohne funktionelle Gruppen, die dem Fachmann bekannt ist und die in Mengen von 8 bis 15 Gew.-% vorliegen, unvermeidbar, aber nicht störend. Falls gewünscht, können deren flüchtige Anteile (Cyclen mit 3-9 Si-Atomen) durch Vakuum und höhere Temperaturen aus dem Produktgemisch destillativ entfernt werden. Ebenso wie die Cyclen können bei der Equilibrierung andere nicht erwünschte aber nicht störende Nebenprodukte in kleinen Mengen erhalten werden.

Als Organopolysiloxane (5) werden vorzugsweise solche ausgewählt aus der Gruppe bestehend aus vorzugsweise linearen, endständige Triorganosiloxygruppen aufweisenden Organopolysiloxanen der Formel

$$R_3SiO(SiR_2O)_rSiR_3,$$

wobei R die oben dafür angegebene Bedeutung hat und
r 0 oder eine ganze Zahl im Wert von vorzugsweise 1 bis 1000, bevorzugt 100 bis 400, ist, und
linearen, endständige Hydroxylgruppen aufweisenden Organopolysiloxanen der Formel

$$HOR_2SiO\ (SiR_2O)_rSiR_2OH,$$

wobei R und r die oben dafür angegebene Bedeutung haben, eingesetzt.

Das Mengenverhältnis der bei der gegebenenfalls durchgeführten Equilibrierung eingesetzten Organopolysiloxane (5) und verzweigten Organosiliciumverbindungen wird lediglich durch den gewünschten Anteil der Alkenylgruppen in den bei der gegebenenfalls durchgeführten Equilibrierung erzeugten verzweigten Organosiliciumverbindungen und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für solche Katalysatoren sind vorzugsweise Alkalihydroxide, wie Natriumhydroxid, Kaliumhydroxid, und Cäsiumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.-ppm, jeweils bezogen auf das Gesamtgewicht der eingesetzten verzweigten Organosiliciumverbindungen und eingesetzten Organopolysiloxane (5), verwendet.

Beispiele für saure Katalysatoren sind vorzugsweise Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten verzweigten Organosiliciumverbindungen und Organopolysiloxane (5), verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten verzweigten Organosiliciumverbindungen und Organopolysiloxane (5), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Als Antimisting Additive werden bevorzugt solche verzweigten Organosiliciumverbindungen eingesetzt, die ohne einen weiteren Equilibrierungsschritt hergestellt werden und besonders hohe Verzweigung aufweisen. Bevorzugte Additive werden erhalten, wenn in den angegebenen besonders bevorzugten stöchiometrischen Bereichen gearbeitet wird.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die Alkenylgruppen aufweisenden Siloxancopolymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend

(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

eingesetzt.

Gegenstand der Erfindung sind weiterhin vernetzbare Siliconbeschichtungszusammensetzung mit reduzierter Aerosolbildung enthaltend

(X) erfindungsgemäße Antimisting Additive
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren und gegebenenfalls
(D) Inhibitoren

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel

$$R^5_z R^6_y SIO_{\frac{4-z-y}{2}} \quad \text{(VI)},$$

wobei $R^5$ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit terminaler, aliphatischer Kohlenstoff-Kohlenstoff-Mehrfachbindung mit 2 bis 8 Kohlenstoffatomen je Rest bedeutet,
z 0, 1, 2 oder 3,
y 0, 1 oder 2
und die Summe z+y 0, 1, 2 oder 3 ist,
mit der Maßgabe, dass durchschnittlich mindestens 1,5 Reste $R^6$, bevorzugt durchschnittlich mindestens 2 Reste $R^6$, vorliegen, verwendet.

Bevorzugt als Organosiliciumverbindungen (A) sind Organopolysiloxane der allgemeinen Formel

$$R^6_g R^5_{3-g} SiO(SiR^5_2O)_v(SiR^5R^6O)_w SiR^5_{3-g} R^6_g \quad \text{(VII)}$$

wobei $R^5$ und $R^6$ die oben dafür angegebene Bedeutung haben,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste $R^6$, bevorzugt durchschnittlich mindestens 2 Reste $R^6$,

enthalten sind.

Im Rahmen dieser Erfindung soll Formel (VII) so verstanden werden, dass v Einheiten -($SiR^5_2O$)- und w Einheiten -($SiR^5R^6O$)-in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in US 6,034,225, insbesondere Spalte 1, Zeile 43 bis Spalte 2, Zeile 13, und US 6,258,913, insbesondere Spalte 1, Zeile 62 bis Spalte 2, Zeile 35, beschrieben sind, verwendet werden. Als Organosiliciumverbindungen (A) können auch lineare Organopolysiloxane, wie sie in US 6,274,692 , insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden. Als Organosiliciumverbindungen (A) können auch solche, wie sie in US-A 5,241,034 , insbesondere Spalte 16, Zeile 23 bis Spalte 17, Zeile 35, DE-A 195 22 144, insbesondere Seite 2, Zeile 44 bis 67, DE-A 196 29 053 , insbesondere Seite 2, Zeile 51 bis Seite 3, Zeile 29, und US-A 6,265,497, insbesondere Spalte 2, Zeile 3 bis 47, beschrieben sind, verwendet werden.

Die Organopolysiloxane (A) besitzen vorzugsweise eine durchschnittliche Viskosität von 100 bis 10 000 mPa. s bei 25°C.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^6$ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel

$$R^5_eH_fSiO_{\frac{4-e-f}{2}} \qquad \text{(VII)},$$

wobei

$R^5$ die oben dafür angegebene Bedeutung hat,

e 0, 1, 2 oder 3,

f 0, 1 oder 2

und die Summe von e+f 0, 1, 2 oder 3 ist,

mit der Maßgabe, dass durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

$$H_hR^5_{3-h}SiO(SiR^5_2O)_o(SiR^5HO)_pSiR^5_{3-h}H_h \qquad \text{(IX)}$$

wobei $R^5$ die oben dafür angegebene Bedeutung hat,

h 0, 1 oder 2,

o 0 oder eine ganze Zahl von 1 bis 1500 und

p 0 oder eine ganze Zahl von 1 bis 200 ist,

mit der Maßgabe, dass durchschnittlich mindestens 2 Si-gebundene Wasserstoffatome, vorliegen, verwendet.

Im Rahmen dieser Erfindung soll Formel (IX) so verstanden werden, dass o Einheiten -($SiR^5_2O$)- und p Einheiten -($SiR^5HO$)-in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/ oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Als Organosiliciumverbindungen (B) können auch solche, wie sie in US-A 5,691,435, insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa. s bei 25°C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel $HC{\equiv}C\text{-}C(CH_3)(OH)\text{-}CH_2\text{-}CH_2\text{-}CH{=}C(CH_3)_2$, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$R^7R^5_2SiO_{1/2}$ und $SiO_2$,

sogenannte MQ-Harze, wobei $R^7$ ein Wasserstoffatom, ein Kohlenwasserstoffrest $R^5$, wie Methylrest, ein Alkenylrest $R^6$, wie Vinylrest, ist, und $R^5$ und $R^6$ die oben dafür angegebene Bedeutung haben und die Einheiten der Formel $R^7R^5_2SiO_{1/2}$ gleich oder verschieden sein können. Das Verhältnis von Einheiten der Formel $R^7R^5_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 $g/m^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 2000 m/min, bevorzugt 400 bis 1500 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstofffilm, der beispielsweise auf einem Etikettenfacepapier aufliegt, auf das beschichtete Papier aufgetragen und der Verbund wird dann zusammengepresst. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 300 bis 2000 m/min, bevorzugt 400 bis 1500 m/min, betrieben werden.

**1. Herstellung der verzweigten Organosiliciumverbindungen**

Beispiel 1:

2,00 g Tris(dimethylsiloxy)phenylsilan werden jeweils mit genau der 132-fachen Menge $\alpha,\omega$-Divinylpolydimethylsiloxan der Jodzahl 3,14 und Toluol homogen gemischt (C=C/SiH = 1,8). Bei 25 °C gibt man nun soviel einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C (einer Lösung des sogenannten Karstedt-Katalysators, dessen Herstellung in US 3,775,452 beschreiben ist) zu, dass das Reaktionsgemisch 5 ppm Platin enthält. Danach wird der Ansatz 1 h auf 80 °C erwärmt. Das Toluol wird bei vermindertem Druck aus der Reaktionsmischung entfernt und durch die gleiche Menge 1-Dodecen ersetzt. Die erhaltene Polymerlösung in $\alpha$-Olefin hat eine Viskosität von 2860 $mm^2/s$ (25 °C).

Beispiel 2:

2,00 g Tris(dimethylsiloxy)phenylsilan werden jeweils mit genau der 100-fachen Menge $\alpha,\omega$-Divinylpolydimethylsiloxan der Jodzahl 4,1 und Toluol homogen gemischt (C=C/SiH = 1,8). Bei 25 °C gibt man nun soviel der in Beispiel 1 beschriebenen Karstedt-Katalysatorlösung zu, dass das Reaktionsgemisch 5 ppm Platin enthält. Danach wird der Ansatz 1 h auf 80 °C erwärmt. Das Toluol wird bei vermindertem Druck aus der Reaktionsmischung entfernt und durch die gleiche Menge 1-Dodecen ersetzt. Die in dem $\alpha$-Olefin erhaltene Polymerlösung hat eine Viskosität von 2670 $mm^2/s$ (25 °C).

Beispiel 3:

2,00 g Tris(dimethylsiloxy)phenylsilan werden jeweils mit genau der 100-fachen Menge $\alpha,\omega$-Divinylpolydimethylsiloxan der Jodzahl 4,1 und trimethylsilylterminiertem Polydimethylsiloxan der Viskosität 9,8 $m^2/s$ (25°C) homogen gemischt (C=C/SiH = 1,8). Bei 25 °C gibt man nun soviel der in Beispiel 1 beschriebenen Karstedt-Katalysatorlösung zu, dass das Reaktionsgemisch 5 ppm Platin enthält. Danach wird der Ansatz 1 h auf 80 °C erwärmt und erreicht danach eine Viskosität von 9200 $mm^2/s$ (25 °C). Die Lösung des vinylfunktionellen verzweigten Siliconpolymers in trimethylsilylterminiertem Polydimethylsiloxan ist klar und mit Polydimethylsiloxan beliebig mischbar.

Beispiel 4:

2,00 g Tris(dimethylsiloxy)phenylsilan werden jeweils mit genau der 132-fachen Menge $\alpha,\omega$-Divinyl-polydimethylsiloxan der Jodzahl 3,14 und trimethylsilylterminiertem Polydimethylsiloxan der Viskosität 9,8 $m^2/s$ (25°C) homogen gemischt (C=C/SiH = 1,8). Bei 25 °C gibt man nun soviel der in Beispiel 1 beschriebenen Karstedt-Katalysatorlösung zu, dass das Reaktionsgemisch 5 ppm Platin enthält. Danach wird der Ansatz 1 h auf 80 °C erwärmt und erreicht danach eine Viskosität von 17800 $mm^2/s$ (25 °C). Die Lösung des vinylfunktionellen verzweigten Siliconpolymers in trimethylsilylterminiertem Polydimethylsiloxan ist klar und mit Polydimethylsiloxan beliebig mischbar.

Beispiel 5:

2,00 g Tris(dimethylsiloxy)phenylsilan werden jeweils mit genau der 100-fachen Menge $\alpha,\omega$-Divinylpolydimethylsiloxan der Jodzahl 4,1 und Toluol homogen gemischt (C=C/SiH = 1,8). Bei 25 °C gibt man nun soviel der in Beispiel 1 beschriebenen Karstedt-Katalysatorlösung zu, dass das Reaktionsgemisch 5 ppm Platin enthält. Danach wird der Ansatz 1 h auf 80 °C erwärmt. Das Toluol wird bei vermindertem Druck aus der Reaktionsmischung entfernt und durch

die dreifache Menge eines α,ω-Divinylpolydimethylsiloxan mit der Viskosität von 200 $mm^2/s$ (25 °C) ersetzt. Die erhaltene Mischung des verzweigten vinylfunktionellen Polymers α,ω-Divinylpolydimethylsiloxan hat eine Viskosität von 1600 $mm^2/s$ (25 °C).

**2. Verwendung der verzweigten Organosiliciumverbindungen als Antimisting Additive:**

Beispiel 6:

Die Anwendung der erfindungsgemäßen verzweigten Organosiliciumverbindungen zur Reduktion der Aerosolbildung erfolgt als Additiv in vernetzbaren Siliconbeschichtungssystemen für den Einsatz in schnellen Beschichtungsprozessen.

Als Standardformulierung wurde eine Mischung aus
100 Gew.-teile eines linearen α,ω-Divinyldimethylpolysiloxans mit einer Viskosität von 300 mPa·s (25°C),
3,1 Gew.-teile eines linearen Polysiloxans aus Hydrogenmethylsiloxan- und Dimethylsiloxaneinheiten im Molverhältnis 2 : 1 mit Trimethylsiloxanendeinheiten und einer Viskosität von 34 mPa·s (25°C),
1,25 Gew.-teile einer 1 Gew.-%igen (bezogen auf elementares Platin) Lösung eines Platin-1,3-Divinyl-1,1,3,3-tetramethyldisiloxan-Komplexes in einem α,ω-Divinyldimethylpolysiloxan mit einer Viskosität von 1000 mPa·s bei 25°C und
0,3 Gew.-teile 1-Ethinylcyclohexanol
eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 $g/m^2$ verwendet. Die Beschichtung erfolgte auf der Beschichtungsanlage "BMB Pilotplant" der Fa. Bachofen & Meier AG mit einem 5 Walzen-Auftragswerk, bei 550 m/min. Dabei wurde die Auftragsrolle mit 95% der Papiergeschwindigkeit gefahren. Die Beschichtung wurde im Trocknungsofen mit 18 m Länge bei 160°C ausgehärtet. Dies entspricht einer Vernetzungszeit von 1,96 Sekunden.

Die Aerosolbildung wurde mit dem Dusttrak Aerosol Monitor Model 8520 bestimmt. Die Probennahme erfolgt zwischen Siliconauftragswalze und Walzenspalt in einem Abstand von 12 cm zur Siliconauftragswalze.
Der Blindwert an Aerosolen vor den Beschichtungsversuchen lag zwischen 0,028 - 0,031 $mg/m^3$. Während der Beschichtungsversuche wurden die minimalen und maximal angezeigten Aerosolwerte protokolliert und der Durchschnitt errechnet. Die durchschnittlich gemessenen Aerosolwerte während der Beschichtungsversuche wurden um den Blindwert von 0,03 $mg/m^3$ korrigiert, um den reinen Effekt der erfindungsgemäßen Antimisting Additive zu ermitteln.

Das Beschichtungsgewicht wurde mittels Röntgenfluoreszenzanalyse in Referenz zu einem geeigneten Standard bestimmt.

Da die Stärke der Aerosolbildung u.a. vom Beschichtungsgewicht abhängig ist, wurden die mittleren berechneten Aerosolwerte auf ein Beschichtungsgewicht von 1 $g/m^2$ zur besseren Vergleichbarkeit normiert.

Der Einfluss der erfindungsgemäßen Antimisting Additive auf die Aushärtung des Beschichtungssystems wurde sofort mittels Migrationstest bestimmt und parallel mittels Extraktion unvernetzter Anteile in MIBK (=Methylisobutylketon).

Die Migration wird entsprechend ihres Ausmaßes mit den Noten 1 bis 6 beurteilt, wobei die Note 1 keine Migration (vollständige Aushärtung), die Note 3 eine leichte und die Note 6 eine starke Migration (unvollständige Aushärtung) bedeutet.

Der Einfluss der erfindungsgemäßen Antimisting Additive auf die Haftung des Beschichtungssystems zum Substrat wurde mittels Rub-off-Test bestimmt. Der Abrieb wird entsprechend seines Ausmaßes mit den Noten von 1 bis 6 beurteilt, wobei die Note 1 keinen Abrieb, die Note 3 einen leichten und die Note 6 einen starken Abrieb bedeutet.

Die Testmethoden sind in der Broschüre DEHESIVE® Silicones Testmethoden der Fa. Wacker-Chemie GmbH beschrieben.
Die Ergebnisse sind in der Tabelle 1 zusammenfasst.

Tabelle 1:

| Additiv | Menge [%] | Misting [mg/m³] | | | mittl.Misting [mg/m³] normiert auf 1,0 g/m² | | | Extrakt [%] |
|---|---|---|---|---|---|---|---|---|
| | | min. | max. | mittel | | Migration | Abrieb | in MIBK |
| Beisp. 1 | 4 | 0,059 | 0,103 | 0,086 | 0,06 | 1 | 2 | 4,0 |
| Beisp. 2 | 4 | 0,041 | 0,063 | 0,055 | 0,04 | 1 | 1 | 4,5 |
| Beisp. 5 | 8 | 0,048 | 0,083 | 0,067 | 0,04 | 1 | 1 | 6,4 |
| Beisp. 5 | 4 | 0,057 | 0,189 | 0,134 | 0,09 | 1 | 2 | 4,5 |
| Beisp. 5 | 2 | 0,136 | 0,256 | 0,180 | 0,13 | 1 | 1 | 4,3 |
| - | - | 19,47 | 30,17 | 24,27 | 16,51 | 1 | 2 | 3,9 |

Die Beispiele im Vergleich zum Vergleichsversuch ohne Additiv zeigen, dass der Zusatz der erfindungsgemäßen Antimisting Additive die Aerosolbildung vernetzbarer Siliconbeschichtungssysteme in schnellen Beschichtungsprozessen deutlich reduziert.

Nachteilige Effekte bei Migration und Substrathaftung (Abrieb) werden nicht beobachtet; der Anteil der extrahierbaren Anteile ist im Rahmen der Messgenauigkeit nicht erhöht.

Beispiel 7:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen verzweigten Organosiliciumverbindungen zur Reduktion der Aerosolbildung erfolgte als Additiv in vernetzbaren Siliconbeschichtungssystemen für den Einsatz in solchen Beschichtungsprozessen.

Als Standardformulierung wurde eine Mischung aus
100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird,
3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyldisiloxan-Komplexes in einem $\alpha,\omega$-Divinyldimethylpolysiloxan mit einer Viskosität von 1000 mPa·s bei 25°C und
0,3 Gew.-teile 1-Ethinylcyclohexanol
eingesetzt.

Die erfindungsgemäßen Additive gemäß den in Tabelle 2 angegebenen Herstellungsbeispielen wurden der Standardformulierung gemäß den in Tabelle 2 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 g/m² verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.

Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze. Zusätzlich wurde die Aerosolbildung visuell beurteilt und mit den Ziffern 1 - 3 bewertet:

1 keine sichtbare Aerosolbildung
2 schwach sichtbare Aerosolbildung
3 starke Aerosolbildung.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 4 g/m².

Weiterhin wurde Einfluss der erfindungsgemäßen Antimisting Additive auf die Aushärtung des Beschichtungssystems mittels Migrationstest bestimmt. Der Migrationstest ist in der Broschüre DEHESIVE® Silicones Testmethoden der Fa. Wacker-Chemie GmbH beschrieben.

Die Ergebnisse sind in Tabelle 2 zusammengefasst.

Tabelle 2:

| Additiv | Menge Additiv in % | Misting, mg/m$^3$ (Dusttrak) | Misting (visuell) | Migration |
|---|---|---|---|---|
| Beispiel 5 | 8 | 2 | 1 | 2 |
| Beispiel 3 | 4 | 1 | 1 | 1,5 |
| Beispiel 4 | 0,8 | 1 | 1,5 | 1,5 |
| Beispiel 1 | 4 | 1 | 1 | 1,5 |
| Beispiel 2 | 4 | 0,8 | 1 | 1 |
| - | - | 17 | 3 | 2 |

Die Vergleichsversuche zeigen, dass der Zusatz der erfindungsgemäßen verzweigten Organosiliciumverbindung als Antimisting Additive die Aerosolbildung vernetzbarer Siliconbeschichtungssysteme in schnellen Beschichtungsprozessen deutlich reduziert.

Bespiel 8 und Vergleichsversuch gemäß EP-A 716 115:

Ein wichtiges Kriterium für die einfache Verwendbarkeit von Antimisting Additiven in härtbaren Zusammensetzungen ist deren Mischbarkeit mit diesen Zusammensetzungen.
Um reproduzierbare Ergebnisse bei der Aushärtung auf der Beschichtungsmaschine zu erhalten, ist es von Vorteil, wenn sich das Additiv in der gewünschten Menge ohne größeren Aufwand in der härtbaren Zusammensetzung homogen verteilen lässt und eine klare Formulierung bildet. Hierzu werden 104,4 g der Standardformulierung gemäß Beispiel 6 mit jeweils 10 g der Additive gemäß den Herstellungsbeispielen 1 bis 5 unter Verwendung eines Glasstabes durch mäßiges Rühren gemischt, sodass in wenigen Minuten eine anwendungsfertige Formulierung entsteht. Alle Formulierungen sind homogen, klar und frei von Schlieren.

Zum Vergleich wird nach dem Stand der Technik ein Antimisting Additiv gemäß EP-A 716 115 hergestellt:

Ein Gemisch aus 34 g 2-Methyl-3-buten-2-ol und 190 g eines Allylpolyethers der Formel $CH_2=CH-CH_2O(C_2H_4O)_{9,4}H$ wird mit 200 g eines Trimethylsiloxy-Endgruppen aufweisendenen Siloxans aus Hydrogenmethylsiloxan- und Dimethylsiloxaneinheiten (0,30 Gew.- % Aktivwasserstoff, Viskosität 37 mm$^2$/s bei 25°C) gemischt, auf 50°C erwärmt und mit 20 ppm Platin in Form des in Beispiel 8 beschriebenen Platinkatalysators (Karstedt-Katalysator) aktiviert. Die exotherme Reaktion liefert nach 2 Stunden ein klares Produkt mit weniger als 0,002 Gew.-% Aktivwasserstoff und leicht brauner Färbung.

Einrühren von 10 g dieses Produktes in 104,4 g der Standardformulierung gemäß Beispiel 6 liefert ein milchiges Gemisch, das nach 4 Stunden Lagerung starke Phasenseparation zeigt. Auch wenn man nur 5 g dieses Additivs unter starker Scherung mit einem Turrax®-Gerät einmischt, erhält man keine klare Formulierung.

## Patentansprüche

**1.** Verwendung von Antimisting Additiven in vernetzbaren Siliconbeschichtungszusammensetzungen zur Reduktion der Aerosolbildung, **dadurch gekennzeichnet, dass**
als Antimisting Additive verzweigte Organosiliciumverbindungen enthaltend

(a) je Molekül mindestens eine Einheit der allgemeinen Formel

$$\begin{array}{c} A \\ | \\ A\text{-}Si\text{-}A \\ | \\ B \end{array} \quad (I),$$

wobei A einen Rest der allgemeinen Formel

$$-(OSiR^1R^2)_z-(OSiR_2)_x-Y-SiR_2O_{1/2}$$

bedeutet, R gleich oder verschieden ist und einen einwertigen, aliphatisch gesättigten oder aromatischen Kohlenwasserstoffrest mit 1 bis 12 Kohlenstoffatomen je Rest bedeutet,

$R^1$ einen Rest der allgemeinen Formel

$$-OSiR_2-Y-SiR_2O_{1/2}$$

bedeutet,

$R^2$ die Bedeutung von R, $R^1$ oder R' hat, wobei R' einen einwertigen, aliphatisch gesättigten oder aromatischen Kohlenwasserstoffrest mit 1 bis 12 Kohlenstoffatomen je Rest, der ein oder mehrere Heteroatome ausgewählt aus der Gruppe von O, S, N, Si und Ti enthält, bedeutet,

Y einen zweiwertigen Kohlenwasserstoffrest der allgemeinen Formel

$$-CH_2CHR^5(-R^4)_v-$$

bedeutet, $R^4$ einen zweiwertigen Kohlenwasserstoffrest mit 1 bis 10 Kohlenwasserstoffatomen je Rest oder eine chemische Bindung bedeutet, wenn v den Wert 0 hat,

$R^5$ ein Wasserstoffatom ist oder die Bedeutung von R hat, v 0 oder 1 ist,

x gleich oder verschieden ist, 0 oder 1 ist und

z gleich oder verschieden ist, 0 oder 1 ist,

und B die Bedeutung von A oder R oder R' hat, mit der Maßgabe, dass B gleich R oder R' ist, wenn x 0 ist,

(b) je Molekül mindestens eine Einheit der allgemeinen Formel

$$O_{1/2}SiR_2R^3 \quad (II),$$

wobei R die oben dafür angegebene Bedeutung hat und

$R^3$ einen aliphatisch ungesättigten Kohlenwasserstoffrest der allgemeinen Formel

$$H_2C{=}CR^5(-R^4)_v-$$

bedeutet, wobei $R^4$ und $R^5$ die oben dafür angegebene Bedeutung haben,

(c) gegebenenfalls Einheiten der allgemeinen Formel

$$O_{1/2}SiR_3 \quad (III),$$

wobei R die oben dafür angegebene Bedeutung hat,

(d) gegebenenfalls Einheiten der allgemeinen Formel

$$SiR_2O \quad (IV),$$

wobei R die oben dafür angegebene Bedeutung hat, und

(e) gegebenenfalls Einheiten der allgemeinen Formel

$$O_{1/2}SiR_2\text{-}Y\text{-}SiR_2O_{1/2} \quad (V),$$

wobei R die oben dafür angegebene Bedeutung hat,
verwendet werden.

**2.** Verwendung nach Anspruch 1, **dadurch gekennzeichnet, dass** der Rest $R^3$ ein Vinylrest ist.

**3.** Verwendung nach Anspruch 1 oder 2, **dadurch gekennzeichnet, dass** Y eine Gruppe der Formel $-CH_2CH_2-$ ist.

**4.** Verwendung nach Anspruch 1, 2 oder 3, **dadurch gekennzeichnet, dass** x 1 und z 0 ist.

**5.** Verwendung von Antimisting Additiven in vernetzbaren Siliconbeschichtungszusammensetzungen zur Reduktion der Aerosolbildung, **dadurch gekennzeichnet, dass** als Antimisting Additive verzweigte Organosiliciumverbindungen herstellbar, indem
in einem ersten Schritt
Verbindungen (1) der allgemeinen Formel

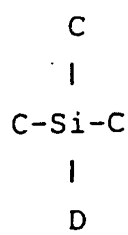

wobei C einen Rest der allgemeinen Formel

$$-(OSiR^6R^7)_z(OSiR_2)_xH$$

bedeutet, wobei x und z die im Anspruch 1 dafür angegebene Bedeutung haben,
$R^6$ einen Rest der allgemeinen Formel

$$-OSiR_2H$$

bedeutet und $R^7$ die Bedeutung von R, R' oder $R^6$ hat, wobei R und R' die im Anspruch 1 dafür angegebene Bedeutung haben, und D die Bedeutung von C oder R oder R' hat, mit der Maßgabe, dass D gleich R oder R' ist, wenn x 0 ist,
und gegebenenfalls Verbindungen (2) der allgemeinen Formel

$$HR_2SiO(R_2SiO)_nSiR_2H$$

wobei R die im Anspruch 1 dafür angegebene Bedeutung hat und

n 0 oder eine ganze Zahl im Wert von 1 bis 100 ist,
mit Organo(poly)siloxanen (3) der allgemeinen Formel

$$R^3R_2SiO(R_2SiO)_mSiR_2R^3$$

wobei R und $R^3$ die im Anspruch 1 dafür angegebene Bedeutung haben und
m 0 oder eine ganze Zahl im Wert von 1 bis 1000 ist,
in Gegenwart von die Anlagerung von aliphatische Doppelbindung an Si-gebundenen Wasserstoff fördernde Katalysatoren (4)
umgesetzt werden,
und gegebenenfalls in einem zweiten Schritt die so erhaltenen verzweigten Organosiliciumverbindungen mit Organopolysiloxanen (5) ausgewählt aus der Gruppe bestehend aus linearen, endständige Triorganosiloxygruppen aufweisenden Organopolysiloxanen und linearen, endständige Hydroxylgruppen aufweisenden Organopolysiloxanen equilibriert werden,
verwendet werden.

6. Verwendung nach einem der Ansprüche 1 bis 5, **dadurch gekennzeichnet, dass** als vernetzbare Siliconbeschichtungszusammensetzung solche enthaltend

   (A) Organosiliciumverbindungen, die Reste mit aliphatischen
   Kohlenstoff-Kohlenstoff-Mehrfachbindungen aufweisen,
   (B) Organosiliciumverbindungen mit Si-gebundenen
   Wasserstoffatomen
   (C) Die Anlagerung von Si-gebundenem Wasserstoff an
   aliphatische Mehrfachbindung fördernde Katalysatoren und gegebenenfalls
   (D) Inhibitoren

   eingesetzt werden.

7. Vernetzbare Siliconbeschichtungszusammensetzung mit reduzierter Aerosolbildung enthaltend

   (X) Antimisting Additive nach einem der Ansprüche 1 bis 5
   (A) Organosiliciumverbindungen, die Reste mit aliphatischen Kohlenstoff-Kohlenstoff-Mehrfachbindungen aufweisen,
   (B) Organosiliciumverbindungen mit Si-gebundenen Wasserstoffatomen
   (C) Die Anlagerung von Si-gebundenem Wasserstoff an aliphatische Mehrfachbindung fördernde Katalysatoren
   und gegebenenfalls
   (D) Inhibitoren

8. Formkörper hergestellt durch Vernetzung der Zusammensetzungen gemäß Anspruch 7.

9. Formkörper gemäß Anspruch 8, **dadurch gekennzeichnet, dass** es sich um Beschichtungen handelt.

10. Formkörper gemäß Anspruch 8, **dadurch gekennzeichnet, dass** es sich um klebrige Stoffe abweisende Überzüge handelt.

11. Verfahren zur Herstellung von Beschichtungen durch Auftragen von vernetzbaren Zusammensetzungen gemäß Anspruch 7 auf die zu beschichtenden Oberflächen und anschließende Vernetzung der Zusammensetzungen.

12. Verfahren zur Herstellung von klebrige Stoffe abweisende Überzüge durch Auftragen von vernetzbaren Zusammensetzungen gemäß Anspruch 7 auf die klebrige Stoffe abweisend zu machenden Oberflächen und anschließende Vernetzung der Zusammensetzungen.

## Claims

**1.** Use of antimisting additives in crosslinkable silicone coating compositions for reducing the formation of aerosol, **characterized in that** use is made as antimisting additives of branched organosilicon compounds containing

a) per molecule at least one unit of the general formula

$$\begin{array}{c} A \\ | \\ A\text{-}Si\text{-}A \\ | \\ B \end{array} \quad (I),$$

where A is a radical of the general formula

$$-(OSiR^1R^2)_2-(OSiR_2)_x-Y-SiR_2O_{1/2}$$

R is identical or different at each occurrence and is a monovalent, aliphatically saturated or aromatic hydrocarbon radical having 1 to 12 carbon atoms per radical,
$R^1$ is a radical of the general formula

$$OSiR_2-Y-SiR_2O_{1/2},$$

$R^2$ has the definition of R, $R^1$ or R', R' being a monovalent, aliphatically saturated or aromatic hydrocarbon radical having 1 to 12 carbon atoms per radical, containing one or more heteroatoms selected from the group consisting of O, S, N, Si and Ti,
Y is a divalent hydrocarbon radical of the general formula

$$-CH2\ CHR^5(-R^4)_v-,$$

$R^4$ is a divalent hydrocarbon radical having 1 to 10 hydrocarbon atoms per radical or is a chemical bond if v is 0,
$R^5$ is a hydrogen atom or has the definition of R,
v is 0 or 1,
x is identical or different and is 0 or 1 and
z is identical or different and is 0 or 1,
and B has the definition of A or R or R' with the proviso that B is R or R' if x is 0,

(b) per molecule at least one unit of the general formula

$$O_{1/2}SiR_2R^3 \qquad (II),$$

where R is as defined above and
$R^3$ is an aliphatically unsaturated hydrocarbon radical of the general formula

$$H_2C{=}CR^5(-R^4)_v-$$

where $R^4$ and $R^5$ are as defined above,

(c) optionally units of the general formula

$$O_{1/2}SiR^3 \qquad (III),$$

where R is as defined above,

(d) optionally units of the general formula

$$SiR_2O \qquad (IV),$$

where R is as defined above, and

(e) optionally units of the general formula

$$O_{1/2}SiR_2\text{-}Y\text{-}SiR_2O_{1/2} \qquad (V),$$

where R is as defined above,
are used.

**2.** Use according to Claim 1, **characterized in that** the radical $R^3$ is a vinyl radical.

**3.** Use according to Claim 1 or 2, **characterized in that** Y is a group of the formula $-CH_2CH_2-$.

**4.** Use according to Claim 1, 2 or 3, **characterized in that** x is 1 and z is 0.

**5.** Use of antimisting additives in crosslinkable silicone coating compositions for reducing the formation of aerosol, **characterized in that** antimisting additives used are branched organosilicon compounds preparable by
in a first step
subjecting compounds (1) to the general formula

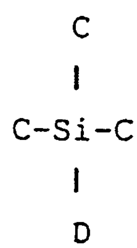

where C is a radical of the general formula

$$-(OSiR^6R^7)_z(OSiR_2)_xH$$

where x and z are as defined in Claim 1,
$R^6$ is a radical of the general formula

$$-OSiR_2H$$

and $R^7$ has the definition of R, R' or $R^6$, R and R' being as defined in Claim 1,
and D has the definition of C or R or R', with the proviso that D is R or R' if x is 0,
and optionally compounds (2) of the general formula

$$HR_2SiO(R_2SiO)_nSiR_2H$$

where R is as defined in Claim 1 and
n is 0 or an integer from 1 to 100
to reaction with organo(poly)siloxanes (3) of the general formula

$$R^3R_2SiO(R_2SiO)_mSiR_2R^3$$

where R and $R^3$ are as defined in Claim 1 and
m is 0 or an integer from 1 to 1000
in the presence of catalysts (4) which promote the addition of aliphatic double bond onto Si-bonded hydrogen, and optionally in a second step equilibrating the resulting branched organosilicon compounds with organopolysiloxanes (5) selected from the group consisting of linear organopolysiloxanes containing terminal triorganosiloxy groups and linear organopolysiloxanes containing terminal hydroxyl groups.

**6.** Use according to any of Claims 1 to 5, **characterized in that** the crosslinkable silicone coating composition comprises

(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond, and if desired
(D) inhibitors.

**7.** Crosslinkable silicone coating composition featuring reduced aerosol formation, comprising

(X) antimisting additives according to any of Claims 1 to 5,
(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond, and if desired
(D) inhibitors.

**8.** Shaped body produced by crosslinking the composition according to Claim 7.

**9.** Shaped body according to Claim 8, **characterized in that** it is a coating.

**10.** Shaped body according to Claim 8, **characterized in that** it is a coating which repels tacky substances.

**11.** Process for producing coatings by applying a crosslinkable composition according to Claim 7 to the surfaces that are to be coated and then crosslinking the composition.

**12.** Process for producing coatings which repel tacky substances by applying a crosslinkable composition according to Claim 7 to the surfaces that are to be made repellent to tacky substances and then crosslinking the composition.

**Revendications**

**1.** Utilisation d'additifs antibuée dans des compositions réticulables de revêtement de silicone pour la réduction de la formation d'aérosols, **caractérisée en ce qu'**on utilise comme additifs antibuée des composés organosiliciés ramifiés comprenant

(a) par molécule au moins une unité de formule générale

$$\begin{array}{c} A \\ | \\ A\text{-}Si\text{-}A \\ | \\ B \end{array} \quad (I),$$

dans laquelle A est un radical de formule générale

$$-(OSiR^1R^2)_z-(OSiR_2)_x-Y-SiR_2O_{1/2}$$

R est identique ou différent et signifie un radical hydrocarboné monovalent, aliphatiquement saturé ou aromatique, comprenant 1 à 12 atomes de carbone par radical,
$R^1$ signifie un radical de formule générale

$$-OSiR_2-Y-SiR_2O_{1/2}$$

$R^2$ a la signification de R, $R^1$ ou R', R' étant un radical hydrocarboné monovalent, aliphatiquement saturé ou aromatique, comprenant 1 à 12 atomes de carbone par radical, qui contient un ou plusieurs hétéroatomes choisis dans le groupe constitué par O, S, N, Si et Ti,
Y signifie un radical hydrocarboné divalent de formule générale

$$-CH_2CHR^5(-R^4)_v-$$

$R^4$ signifie un radical hydrocarboné divalent comprenant 1 à 10 atomes de carbone par radical ou une liaison chimique, lorsque v vaut 0,
$R^5$ est un atome d'hydrogène ou présente la signification de R
v vaut 0 ou 1,
x est identique ou différent et vaut 0 ou 1 et
z est identique ou différent et vaut 0 ou 1
et B a la signification de A ou R ou R', à condition que B représente R ou R' lorsque x vaut 0,
(b) par molécule au moins une unité de formule générale

$$O_{1/2}SiR_2R^3 \qquad (II),$$

dans laquelle R a la signification indiquée ci-dessus et $R^3$ signifie un radical hydrocarboné aliphatiquement insaturé de formule générale

$$H_2C=CR^5(-R^4)_v-$$

dans laquelle $R^4$ et $R^5$ ont la signification indiquée ci-dessus,
(c) le cas échéant des unités de formule générale

$$O_{1/2}SiR_3 \qquad (III)$$

dans laquelle R a la signification indiquée ci-dessus,
(d) le cas échéant des unités de formule générale

$$SiR_2O \qquad (IV),$$

dans laquelle R a la signification indiquée ci-dessus, et
(e) le cas échéant des unités de formule générale

$$O_{1/2}SiR_2\text{-}Y\text{-}SiR_2O_{1/2} \qquad (V)$$

R ayant la signification indiquée ci-dessus.

**2.** Utilisation selon la revendication 1, **caractérisée en ce que** le radical $R^3$ est un radical vinyle.

**3.** Utilisation selon la revendication 1 ou 2, **caractérisée en ce que** Y est un groupe de formule $-CH_2CH_2-$.

**4.** Utilisation selon la revendication 1, 2 ou 3, **caractérisée en ce que** x vaut 1 et z vaut 0.

**5.** Utilisation d'additifs antibuée dans des compositions réticulables de revêtement de silicone pour la réduction de la formation d'aérosols, **caractérisée en ce qu'**on utilise comme additifs antibuée des composés organosiliciés ramifiés, pouvant être préparés **en ce que**, dans une première étape, on transforme des composés (1) de formule générale

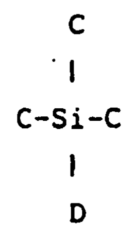

dans laquelle C signifie un radical de formule générale

$$-(OSiR^6R^7)_z(OSiR_2)_xH$$

dans laquelle x et z ont la signification indiquée dans la revendication 1,
$R^6$ signifie un radical de formule générale

$$-OSiR_2H$$

et $R^7$ a la signification de R, R' ou $R^6$, R et R' ayant la signification indiquée dans la revendication 1 et
D a la signification de C ou R ou R', à condition que D représente R ou R' lorsque x vaut 0 et
le cas échéant des composés (2) de formule générale

$$HR_2SiO(R_2SiO)_nSiR_2H$$

dans laquelle R a la signification indiquée dans la revendication 1 et
n vaut 0 ou un nombre entier de 1 à 100,
avec des organo(poly)siloxanes (3) de formule générale

$$R^3R_2SiO(R_2SiO)_mSiR_2R^3$$

dans laquelle R et $R^3$ ont la signification indiquée dans la revendication 1 et

m vaut 0 ou un nombre entier de 1 à 1000,
en présence de catalyseurs (4) favorisant l'addition de la double liaison aliphatique sur de l'hydrogène lié par Si, et le cas échéant, dans une deuxième étape, on équilibre les composés organosiliciés ramifiés ainsi obtenus avec des organopolysiloxanes (5) choisis dans le groupe constitué par les organopolysiloxanes linéaires, présentant des groupes triorganosiloxy en position terminale et les organopolysiloxanes linéaires, présentant des groupes hydroxyle en position terminale.

**6.** Utilisation selon l'une quelconque des revendications 1 à 5, **caractérisée en ce qu'**on utilise comme composition réticulable de revêtement de silicone, des compositions qui contiennent

(A) des composés organosiliciés qui présentent des radicaux avec des liaisons carbone-carbone aliphatiques multiples,
(B) des composés organosiliciés présentant des atomes d'hydrogène liés par Si,
(C) des catalyseurs favorisant l'addition d'hydrogène lié par Si sur une liaison aliphatique multiple et, le cas échéant
(D) des inhibiteurs.

**7.** Composition réticulable de revêtement de silicone présentant une formation réduite d'aérosols, contenant

(X) des additifs antibuée selon l'une quelconque des revendications 1 à 5
(A) des composés organosiliciés qui présentent des radicaux avec des liaisons carbone-carbone aliphatiques multiples,
(B) des composés organosiliciés présentant des atomes d'hydrogène liés par Si,
(C) des catalyseurs favorisant l'addition d'hydrogène lié par Si sur une liaison aliphatique multiple et, le cas échéant
(D) des inhibiteurs.

**8.** Corps façonnés préparés par réticulation des compositions selon la revendication 7.

**9.** Corps façonnés selon la revendication 8, **caractérisés en ce qu'**il s'agit de revêtements.

**10.** Corps façonnés selon la revendication 8, **caractérisés en ce qu'**il s'agit de revêtement repoussant les substances adhésives.

**11.** Procédé de préparation de revêtements par application de compositions réticulables selon la revendication 7 sur les surfaces à revêtir et réticulation consécutive des compositions.

**12.** Procédé pour la préparation de revêtements repoussant les substances adhésives par application de compositions réticulables selon la revendication 7 sur les surfaces à rendre répulsives aux substances adhésives et réticulation consécutive des compositions.